Europäisches Patentamt

European Patent Office

Office européen des brevets

(19)

(11) Publication number: **0 145 841**
**B1**

## (12) EUROPEAN PATENT SPECIFICATION

(45) Date of publication of patent specification: **08.11.89**

(51) Int. Cl.⁴: **G 05 D 17/02**, F 25 B 49/00

(21) Application number: **84109884.1**

(22) Date of filing: **20.08.84**

(54) Torque control apparatus for enclosed compressors.

(30) Priority: **09.09.83 JP 164963/83**

(43) Date of publication of application:
**26.06.85 Bulletin 85/26**

(45) Publication of the grant of the patent:
**08.11.89 Bulletin 89/45**

(84) Designated Contracting States:
**CH DE FR GB IT LI NL SE**

(56) References cited:
**DE-A-2 943 156**
**FR-A-2 347 819**
**US-A-3 130 902**
**US-A-4 177 649**

**IECI '79 PROCEEDINGS - INDUSTRIAL AND CONTROL APPLICATIONS OF MICROPROCESSORS, Philadelphia, 19th-21st March 1979, edited by Dr. Sotirios J. Vahaviolos, pages 37-40, IEEE, New York, US; C.J. RUBIS et al.: "A microprocessor torque computer for gas turbines"**

The file contains technical information submitted after the application was filed and not included in this specification

(73) Proprietor: **HITACHI, LTD.**
**6, Kanda Surugadai 4-chome Chiyoda-ku Tokyo (JP)**

(72) Inventor: **Sutou, Masatsune**
**124, Oaza Tadaagari**
**Ota-shi (JP)**
Inventor: **Uneyama, Yoshihisa**
**1621-64, Oaza Araiichinosunaminami Ohiramachi**
**Shimotsuga-gun Tochigi-ken (JP)**

(74) Representative: **Altenburg, Udo, Dipl.-Phys. et al**
**Patent- und Rechtsanwälte Bardehle-Pagenberg-Dost-Altenburg & Partner Postfach 86 06 20**
**D-8000 München 86 (DE)**

## Description

The present invention relates to enclosed compressors, and more particularly to a torque control apparatus for enclosed compressors as set forth in the preamble of the appended claim 1.

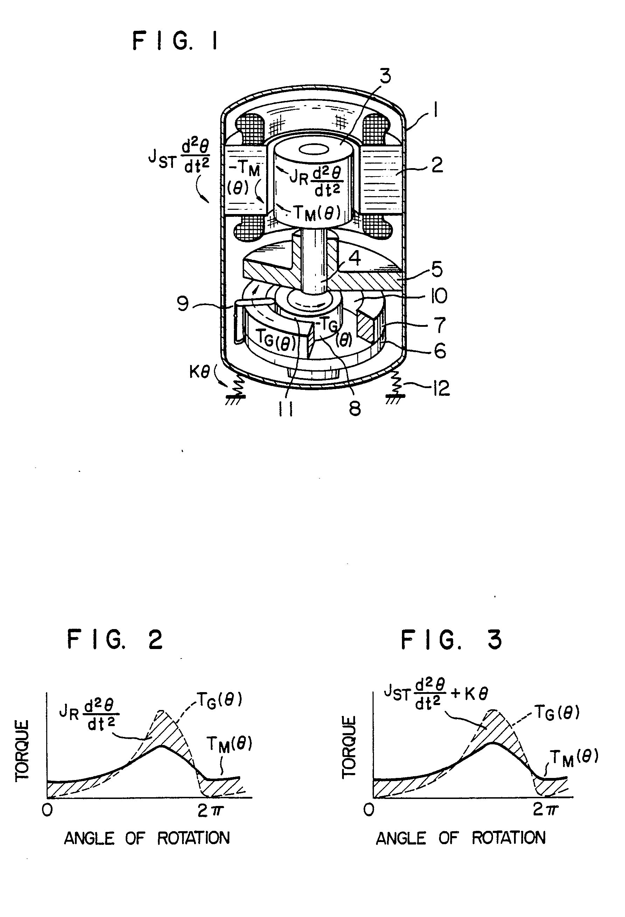

The structure of a conventional enclosed compressor will first be explained, with reference to Fig. 1. In Fig. 1, reference numeral 1 designates a casing for storing therein motor elements and compression elements, 2 a stator fixed to the casing 1, 3 a rotor, 4 a shaft pressed into and fixed to the rotor 3, 5 a main bearing fixed to the casing 1 for supporting the shaft 4, 6 an end bearing for supporting the shaft 4, 7 a cylinder block held between the main bearing 5 and end bearing 6, 8 a roller fitted into a crank portion of the shaft 4, 9 a vane for partitioning a cylinder chamber into a suction chamber 10 and a compression chamber 11, and 12 a vibration-proof member for supporting the compressor. Such a general, rotary compressor is described in U.S. Patent No. 3,130,902.

In the above-mentioned enclosed compressor, a high-pressure gas in the compression chamber 11 produces counterclockwise load torque $-T_G(\theta)$ for the shaft 4, and produces clockwise torque $T_G(\theta)$ for the cylinder block 7. The torque $T_G(\theta)$ is determined mainly by a delivery pressure Pd and a suction pressure Ps.

At a rotating portion including the rotor 3 and shaft 4, the load torque $-T_G(\theta)$ is balanced by the motor output torque $T_M(\theta)$ given by the stator 2 and the inertia torque

$$J_R\frac{d^2\theta}{dt^2}$$

of the rotating portion (where $J_R$ indicates the moment of inertia of the rotating portion, and

$$\frac{d^2\theta}{dt^2}$$

the angular acceleration of the rotating portion whose rotational speed varies. The balance of torque is given by an equation

$$J_R\frac{d^2\theta}{dt^2}+T_M(\theta)=T_G(\theta).$$

It is to be noted that a damping term for the shaft is omitted in the above equation since this term is negligibly small. Fig. 2 shows relationships between the angle of rotation and each of the torque $T_G(\theta)$ and torque $T_M(\theta)$ at a period when the rotating portion is turned (or rotated) once. As shown in Fig. 2, in a range of rotational angle where $T_G(\theta)>T_M(\theta)$, the rotational speed of the rotating portion is reduced at a rate of

$$\frac{d^2\theta}{dt^2},$$

and the inertia torque

$$J_R\frac{d^2\theta}{dt^2}$$

is released to compensate a torque difference $T_G(\theta)-T_M(\theta)$. While, in a range of rotational angle where $T_G(\theta)<T_M(\theta)$, the rotational speed of the rotating portion is increased at a rate of

$$\frac{d^2\theta}{dt^2},$$

and thus a torque difference $T_M(\theta)-T_G(\theta)$ is given to and stored in the rotating portion. Accordingly, the rotational speed of the rotating portion increases and decreases in a period when the rotating portion is turned once, and thus the rotating portion vibrates.

While, on the non-rotational side including the stator 2, cylinder block 7, main bearing 5, and end bearing 6 each fixed to the casing 1, load torque $T_G(\theta)$ and motor output torque $-T_M(\theta)$ appear as the reaction of the load torque $-T_G(\theta)$ and motor output torque $T_M(\theta)$ at the rotating portion, and the torque difference $T_G(\theta)-T_M(\theta)$ appears similarly to the rotating portion. On the non-rotational side, however, the torque difference $T_G(\theta)-T_M(\theta)$ is balanced by inertia torque

$$J_{ST}\frac{d^2\theta}{dt^2}$$

which is produced when a non-rotational body having the moment of inertia $J_{ST}$ is turned so as to have an angular acceleration

$$\frac{d^2\theta}{dt^2},$$

and restoring torque $K\cdot\theta$ which is produced when the vibration-proof member 12 is rotated by an angle $\theta$. The above-mentioned balance is expressed by an equation

$$J_{ST}\frac{d^2\theta}{dt^2}+K\cdot\theta=T_G(\theta)-T_M(\theta).$$

Fig. 3 shows a relationshiop among three quantities

$$J_{ST}\frac{d^2\theta}{dt^2}+K\cdot\theta, T_M(\theta) \text{ and } T_G(\theta)$$

at a period when the rotating portion is turned once. As shown in Fig. 3, the torque difference $T_G(\theta)-T_M(\theta)$ takes positive and negative values in a period when the rotating portion is turned once. That is, the torque difference acts as a vibration generating force, and the whole of the non-rotational body is rotated through an angle $\theta$ (in other words, the non-rotational body vibrates).

As mentioned above, in the conventional enclosed compressor, the torque difference $T_G(\theta)-T_M(\theta)$ acting as a vibration source appears inevitably on the non-rotational side. Accordingly, no vibration-proof means can prevent the compressor from vibrating.

An object of the present invention is to provide an enclosed compressor which is free from vibration by making a difference between the load torque and motor output torque equal to zero, that is, by removing a vibration source in a conventional enclosed compressor.

In order to attain the above object, according to the present invention, the torque control apparatus defined in the introductory part of the description is provided with the features set forth in the characterizing portion of claim 1.

In FR—A—2 347 819 an asynchronous motor drives a compressor for a refrigerator and depending upon the temperature of the evaporator 20 in the refrigerator a phase shift is created via an electronic component 17 which changes the voltage (and hence the current) supplied to the asynchronous motor. By this means, it is stated, the energy consumed by the motor can be made equal to the energy consumed by the compressor. However, there is no disclosure in this prior art that the position of a rotational part of said compressor plays any role at all in controlling said phase shift during each revolution of the compressor and there is no evidence that the torque of the motor is made equal to the load torque on the compressor throughout each revolution.

The above mentioned object of the invention and other objects, features and advantages of the present invention will be apparent from the following detailed description of the preferred embodiments of the invention taken in conjunction with the accompanying drawings, in which:

Fig. 1 is a sectional view showing the structure of a conventional enclosed compressor;

Fig. 2 is a graph showing torque curves on the rotating portion side of the compressor shown in Fig. 1;

Fig. 3 is a graph showing torque curves on the non-rotational side of the compressor shown in Fig. 1;

Fig. 4 is a block diagram showing an embodiment of a torque control system for enclosed compressors according to the present invention; and

Fig. 5 is a block diagram showing another embodiment of a torque control system for enclosed compressors according to the present invention.

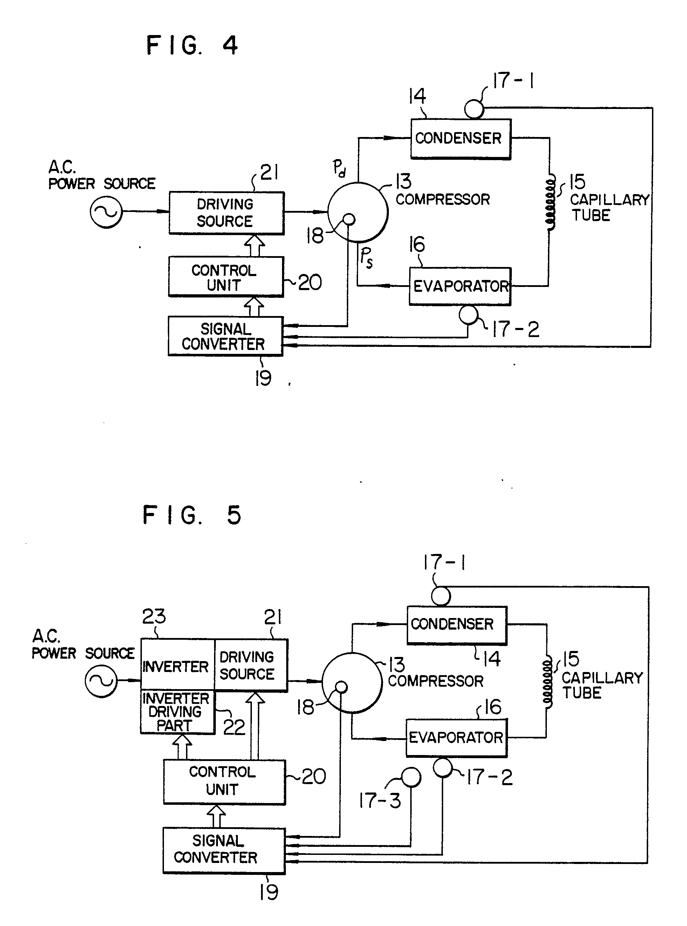

Now, explanation will be made on an embodiment of a torque control system for enclosed compressors according to the present invention, with reference to Fig. 4. In Fig. 4, reference numeral 13 designates a compressor, 14 a condenser, 15 a capillary tube, and 16 an evaporator. These parts 13 to 16 make up a refrigeration cycle. Further, in Fig. 4, reference numerals 17-1 and 17-2 designate detectors for detecting information on a load applied to the compressor 13 (that is, a pressure on the delivery side), 18 a position detector for detecting the rotational position of the rotating portion of the compressor 13, 19 a signal converter for carrying out the analog-to-digital conversion for each of signals from the detectors 17-1, 17-2, and 18, and 20 a control unit formed of a microcomputer or the like. Each of the detectors 17-1 and 17-2 is formed of a temperature sensor such as a thermistor. The position detector 18 is formed of, for instance, a rotary encoder.

An equation $T_G=(P_C-P_S)\cdot S\cdot T$ for determining the torque $T_G(\theta)$ is previously stored in the control unit 20 (where $P_C$ indicates a pressure in a cylinder depending upon the delivery pressure Pd, S is an area of the roller where the torque $T_G$ is applied, and T is a distance between the center axis of the shaft and the point of action of a differential pressure), and the torque $T_G$ shown in Figs. 2 and 3 is calculated by the control unit 20 on the basis of data with respect to the delivery pressure Pd and suction pressure Ps. A temperature corresponding to the delivery pressure Pd is detected by the detector 17-1 and a temperature corresponding to the suction pressure Ps is detected by the detector 17-2 every moment. Further, motor output torque corresponding to the torque $T_G$ thus calculated is calculated as a function of the rotational position of the motor, using position data from the position detector 18. Electric power supplied from a driving source 21 to the compressor 13 is adjusted in synchronism with a change in torque $T_G$, on the basis of an instruction issued from the control unit 20.

In the present embodiment having the above-mentioned construction, information on a load applied to the compressor 13 is detected by the detectors 17-1 and 17-2 which are provided on the parts included in the refrigeration cycle, and the rotational position of the rotating portion of the compressor 13 is detected by the position detector 18. Signals from the detectors 17-1, 17-2, and 18 are transferred to the control unit 20 through the signal converter 19. The magnitude of the load torque applied to the compressor 13 at rotational positions of said compressor during one revolution thereof is calculated by the control unit 20 on the basis of the above signals, and an instruction thus obtained is sent from the control unit 20 to the driving source 21 to control a voltage or current supplied to the compressor. In the compressor 13 thus controlled, throughout each rotation of the rotating portion of the compressor the motor output torque $T_M(\theta)$ is made equal to the load torque $T_G(\theta)$ in synchronism with every change in load torque, and therefore the torque $T_M(\theta)$ and torque $T_G(\theta)$ are well-bal-

anced. Accordingly, the vibration generating torque $T_G(\theta)-T_M(\theta)$ is made equal to zero both on the rotating portion side and on the non-rotational side. That is, the vibration generating source is removed, and thus a vibration-free, enclosed compressor can be obtained.

Fig. 5 shows another embodiment of a torque control apparatus for enclosed compressors according to the present invention. This embodiment has a function of controlling the rate of revolution of the rotating portion in addition to the function of controlling the motor output torque. In Figs. 4 and 5, like reference numerals designate like parts. In Fig. 5, reference numeral 17-3 designates a detector for detecting a temperature around the evaporator 16 to obtain information on a refrigerating capacity required for the compressor 13, 22 an inverter driving part, and 23 an inverter. The control unit 20 issues an instruction for controlling the inverter 23, on the basis of a signal from the detector 17-3, and thus the rate of revolution of the rotating portion is made correspond to the required refrigerating capacity to save electric power. That is, according to the present embodiment, the rate of revolution of the rotating portion and the load torque can be controlled in accordance with a load capacity, and thus an excellent enclosed compressor can be obtained which is small in power consumption and free from vibration.

As has been explained in the foregoing, according to the present invention, a voltage or current supplied to an enclosed compressor is controlled by a control system so that the motor output torque is made equal to the load torque in syncronism with every change in the load torque throughout each rotation of the rotating portion of the compressor, and therefore a difference between the load torque and motor output torque which acts as the vibration generating torque for the compressor, can be made equal to zero. Thus, a vibration-free, enclosed compressor can be obtained.

## Claims

1. A torque control apparatus for a compressor, the torque control apparatus comprising a compressor (13), an electric motor for driving the compressor, control means for controlling the electric power applied to the motor, and first detecting means (17-1, 17-2) for detecting information on the load applied to the compressor (13); characterized by:

second detecting means (18) for detecting the rotational position of a rotating portion of said compressor; said control means comprising:

a first control unit (19, 20) for calculating on the basis of output signals from said first detecting means (17-1, 17-2) and said second detecting means (18) the magnitude of a load torque ($T_G(\theta)$) applied to said compressor throughout each rotation of the rotating portion of the compressor and in dependance on the rotational position thereof and

a second control unit (21, 22, 23), for controlling a voltage or current applied to the motor for driving said compressor, in response to said magnitude of the load torque ($T_G(\theta)$) thereby controlling the output torque ($T_M(\theta)$) of said motor to equal said load torque throughout each rotation of the rotating portion of the compressor.

2. A torque control apparatus according to Claim 1, wherein said first detecting means (17-1, 17-2) is composed of temperature sensing means.

3. A torque control apparatus according to Claim 1 having in series with the compressor (13) a condensor (14) and an evaporator (16) jointly forming a refrigeration cycle; and wherein said first detecting means (17-1, 17-2) detects the temperatures of said condensor (14) and said evaporator (16).

4. A torque control apparatus according to Claim 3 having a third detecting means (17-3) for detecting information on the refrigeration capacity required to be produced by the compressor;

said first control unit (19, 20) calculating additionally the desired rate of revolutions of a rotating portion of said compressor on the basis of an output from said third detecting means (17-3); and

wherein said second control unit (21, 22, 23) is responsive also to the rate of revolution of the compressor.

5. A torque control apparatus according to Claim 4 wherein said second control unit (21, 22, 23) includes an inverter (23) which controls voltage or current applied to the motor in response to said rate of revolutions.

6. A torque control apparatus according to Claim 4 wherein said first detecting means (17-1, 17-2) comprises a temperature sensor.

7. A torque control apparatus according to Claim 4 wherein said third detecting means (17-3) detects the environmental temperature of said evaporator (16) and wherein said second control unit (21, 22, 23) additionally controls the rate of revolution of the compressor.

## Patentansprüche

1. Drehmomentsteuervorrichtung für einen Kompressor, wobei die Drehmomentsteuervorrichtung einen Kompressor (13), einen Elektromotor zum Antreiben des Kompressors, eine Steuereinrichtung zum Steuern der dem Motor zugeführten elektrischen Leistung und eine erste Detektionseinrichtung (17-1, 17-2) zum Detektieren von Information in bezug auf die Last, die am Kompressor (13) anliegt, aufweist, gekennzeichnet durch

eine zweite Detektionseinrichtung (18) zum Detektieren der Drehposition eines drehenden Abschnitts des Kompressors; wobei die Steuereinrichtung aufweist;

eine erste Steuereinheit (19, 20) zum Berechnen auf der Basis der Ausgangssignale der ersten Detektionseinrichtung (17-1, 17-2) und der zweiten Detektionseinrichtung (18) der Größe eines

Lastdrehmoments ($T_G(\theta)$), das an dem Kompressor anliegt, bei jeder Drehung des drehenden Abschnitts des Kompressors und in Abhängigkeit von der Drehposition desselben, und

eine zweite Steuereinheit (21, 22, 23) zum Steuern einer Spannung oder eines Stromes, der dem Motor zum Antreiben des Kompressors zugeführt wird, in Antwort auf die Größe des Lastdrehmoments ($T_G(\theta)$), wodurch das Ausgangsdrehmoment ($T_M(\theta)$) des Motors so gesteuert wird, daß es gleich dem Lastdrehmoment ist, und zwar bei jeder Drehung des drehenden Abschnitts des Kompressors.

2. Drehmomentsteuervorrichtung nach Anspruch 1, dadurch gekennzeichnet, daß die erste Detektionseinrichtung (17-1, 17-2) zusammengesetzt ist aus einer Temperatur bestimmenden Einrichtung.

3. Drehmomentsteuervorrichtung nach Anspruch 1, gekennzeichnet durch einen Kondensator (14) und einen Verdampfer (16) in Seire mit dem Kompressor (13), die zusammen einer Kühlkreislauf bilden, wobei die erste Detektionseinrichtung (17-1, 17-2) die Temperaturen des Kondensators (14) und des Verdampfers (16) detektiert.

4. Drehmomentsteuervorrichtung nach Anspruch 3, gekennzeichnet durch eine dritte Detektionseinrichtung (17-3) zum Detektieren von Information über die Kühlkapazität, die vom Kompressor erzeugt werden soll, wobei die erste Steuereinrichtung (19, 20) zusätzlich die vorgesehene Umdrehungsrate eines drehenden Abschnitts des Kompressors auf der Basis eines Ausgangs der dritten Detektionseinrichtung (17-3) berechnet und wobei die zweite Steuereinheit (21, 22, 23) auch auf die Umdrehungsrate des Kompressors reagiert.

5. Drehmomentsteuervorrichtung nach Anspruch 4, dadurch gekennzeichnet, daß die zweite Steuereinheit (21, 22, 23) einen Inverter (23) aufweist, der die Spannung oder den Strom steuert, der an dem Motor anliegt, und zwar in Antwort auf die Umdrehungsrate.

6. Drehmomentsteuervorrichtung nach Anspruch 4, dadurch gekennzeichnet, daß die erste Detektionseinrichtung (17-1, 17-2) einen Temperatursensor aufweist.

7. Drehmomentsteuervorrichtung nach Anspruch 4, dadurch gekennzeichnet, daß die dritte Detektionseinrichtung (17-3) die Umgebungstemperatur des Verdampfers (16) detektiert und daß die zweite Steuereinheit (21, 22, 23) zusätzlich die Umdrehungsrate des Kompressors steuert.

**Revendications**

1. Dispositif de commande de couple pour un compresseur, comportant un compresseur (13), un moteur électrique pour entraîner le compresseur, des moyens de commande pour commander l'énergie électrique délivrée au moteur, et des premiers moyens de détection (17-1, 17-2) pour détecter une information concernant la charge appliquée au compresseur (13); caractérisé par:

des seconds moyens de détection (18) pour détecter la position de rotation d'une partie rotative dudit compresseur; lesdits moyens de commande comportant:

une première unité de commande (19, 20) pour calculer, sur la base de signaux de sortie provenant desdits premiers moyens de détection (17-1, 17-2) et desdits seconds moyens de détection (18) sur chaque rotation de ladite partie rotative du compresseur et en fonction de la position de rotation de celle-ci, l'amplitude d'un couple de charge ($T_G(\theta)$) appliqué audit compresseur, et

une seconde unité de commande (21, 22, 23), pour commander une tension ou un courant appliqué au moteur pour entraîner ledit compresseur, en réponse à ladite amplitude du couple de charge ($T_G(\theta)$) en commandant ainsi le couple de sortie ($T_M(\theta)$) dudit moteur pour égaler ledit couple de charge sur chaque rotation de la partie rotative du compresseur.

2. Dispositif de commande de couple selon la revendication 1, dans lequel lesdits premiers moyens de détection (17-1, 17-2) sont constitués par des moyens sensibles à la température.

3. Dispositif de commande de couple selon la revendication 1 possédant en série avec le compresseur (13) un condenseur (14) et un évaporateur (16) formant conjointement un cycle de réfrigération; et dans lequel lesdits premiers moyens de détection (17-1, 17-2) détectent les températures dudit condenseur (14) et dudit évaporateur (16).

4. Dispositif de commande de couple selon la revendication 3, possédant des troisièmes moyens de détection (17-3) pour détecter une information concernant la capacité de réfrigération devant être produite par le compresseur;

ladite première unité de commande (19, 20) calculant en outre la vitesse désirée de rotation d'une partie rotative dudit compresseur sur la base d'un signal de sortie provenant desdits troisièmes moyens de détection (17-3); et

dans lequel ladite seconde unité de commande (21, 22, 23) est sensible également à la vitesse de rotation du compresseur.

5. Dispositif de commande de couple selon la revendication 4, dans lequel ladite seconde unité de commande (21, 22, 23) comprend un onduleur (23) qui commande la tension ou le courant appliqué au moteur en réponse à ladite vitesse de rotation.

6. Dispositif de commande de couple selon la revendication 4, dans lequel lesdits premiers moyens de détection (17-1, 17-2) comportent un capteur de température.

7. Dispositif de commande de couple selon la revendication 4, dans lequel lesdits troisièmes moyens de détection (17-3) détectent la température environnante dudit évaporateur (16) et dans lequel ladite seconde unité de commande (21, 22, 23) commande en outre la vitesse de rotation du compresseur.

F I G. 1

F I G. 2

ANGLE OF ROTATION

F I G. 3

ANGLE OF ROTATION

1

## F I G. 4

A.C. POWER SOURCE

DRIVING SOURCE ~21

CONTROL UNIT ~20

SIGNAL CONVERTER

19

$P_d$

18 $P_s$

13 COMPRESSOR

14 CONDENSER

17-1

15 CAPILLARY TUBE

16 EVAPORATOR

17-2

## F I G. 5

A.C. POWER SOURCE

23 INVERTER

21 DRIVING SOURCE

INVERTER DRIVING PART ~22

CONTROL UNIT ~20

SIGNAL CONVERTER

19

18

13 COMPRESSOR

17-1

CONDENSER

14

15 CAPILLARY TUBE

16 EVAPORATOR

17-3

17-2